# FASCICULE DE BREVET EUROPEEN

(11) **EP 0 601 017 B1**
(45) Date de publication et mention de la délivrance du brevet: **06.03.1996**
(21) Numéro de dépôt: 92918357.2
(22) Date de dépôt: 07.08.1992
(51) Int. Cl.: A01G 27/00

(54) **DISPOSITIF D'ARROSAGE EN CONTINU DE PLANTES**
VORRICHTUNG ZUR KONTINUIERLICHEN BEWÄSSERUNG VON PFLANZEN
DEVICE FOR THE CONTINUOUS WATERING OF PLANTS

(30) Priorité: 26.08.1991 FR 9110600; 25.02.1992 FR 9202143
(43) Date de publication de la demande: 15.06.1994
(73) Titulaire: AZOULAY, Serge, F-94200 Ivry-sur-Seine (FR)
(72) Inventeur: AZOULAY, Serge, F-94200 Ivry-sur-Seine (FR)
(74) Mandataire: Busnel, Jean-Benoît
(86) Numéro de dépôt international: FR9200780
(87) Numéro de publication internationale: WO9303605

(56) Documents cités:
- DE-U- 1 907 610
- DE-U- 1 926 493
- DE-U- 1 993 737
- DE-U- 7 241 583
- US-A- 4 300 309

## Description

La présente invention concerne un dispositif d'arrosage en continu de plantes.

Il existe des procédés et des dispositifs traditionnels d'arrosage en continu ou d'irrigation parmi lesquels on peut citer :
- le regroupement des plantes sur des plateaux remplis d'eau et de gravier ou sur des tapis spongieux imbibés d'eau, l'humidification par capillarité entre un seau d'eau et la terre du pot ;
- l'utilisation de bouteilles munies de petits tuyaux pour amener l'eau à la terre des plantes par siphonnage.

Ces procédés sont fastidieux, longs à mettre en place, peu fiables, aléatoires et nécessitent savoir-faire, attention et expérience pour être efficaces.

Par ailleurs, les différents systèmes qui existent actuellement sur le marché utilisent une distribution d'eau sous pression et sont donc plus adaptés aux équipements stationnaires de jardin qu'aux montages temporaires pour assurer momentanément la survie des plantes d'appartement. En effet, les installations correspondantes sont onéreuses, longues à mettre en service. rigides et encombrantes. Elles comportent, en outre, de nombreux raccordements à mettre en place avec précaution et sécurité, car un défaut d'étanchéité peut provoquer des inondations du fait de la pression constante qui règne dans les tuyauteries et dans les différents accessoires.

Le DE-U-1 933 737 décrit un dispositif d'arrosage comportant un réservoir pourvu à sa base d'un pied muni d'un tube creux central renfermant un filtre en communication avec la terre.

Cependant, ce dispositif ne comporte aucun moyen permettant le régulation du débit d'arrosage.

De plus, la stabilité de ce dispositif n'est assurée que grâce à l'appui sur la paroi interne du pot de terre.

Le DE-U-1 926 493 décrit un dispositif similaire avec un réservoir comportant à sa base un filtre suspendu au-dessus d'un pied pourvu d'un tube creux central et une collerette horizontale qui prend appui sur la terre.

Cependant, ce dispositif ne permet pas une diffusion régulière et continue de l'eau du réservoir vers la terre.

De plus, compte tenu du volume important du réservoir, il semble nécessaire de prévoir une collerette de grand diamètre qui masque alors une surface de terre importante au détriment de la plante.

Le dispositif de l'invention (voir revendication 1) peut être réalisé avec un réservoir entièrement en matière plastique dure, éventuellement transparente, comportant un couvercle pour empêcher une évaporation rapide. Ce réservoir comporte éventuellement des doubles parois vides ou remplies de laine de verre pour une conservation beaucoup plus longue de l'eau.

Ce réservoir peut avoir des formes différentes (selon la réserve d'eau nécessaire). Il pourra comporter plusieurs filtres (selon la capacité d'eau réclamée par la plante). Le dispositif de l'invention est de mise en oeuvre facile et est économique.et permet d'obtenir une meilleure stabilité mécanique, même dans un sol meuble.

L'invention sera mieux comprise à la lecture de la description qui va suivre en référence aux dessins annexés sur lesquels :
- les figures la et 1b représentent des vues en coupe d'un mode de réalisation du dispositif de l'invention respectivement avant et après assemblage ;
- la figure 2 représente une vue de dessus du dispositif de la figure 1;
- la figure 3 représente une vue de détail en perspective du dispositif de l'invention ;
- la figure 4 représente une vue en coupe partielle d'un autre mode de réalisation de l'invention ; et,
- la figure 5 représente une vue de dessus du dispositif de la figure 4.

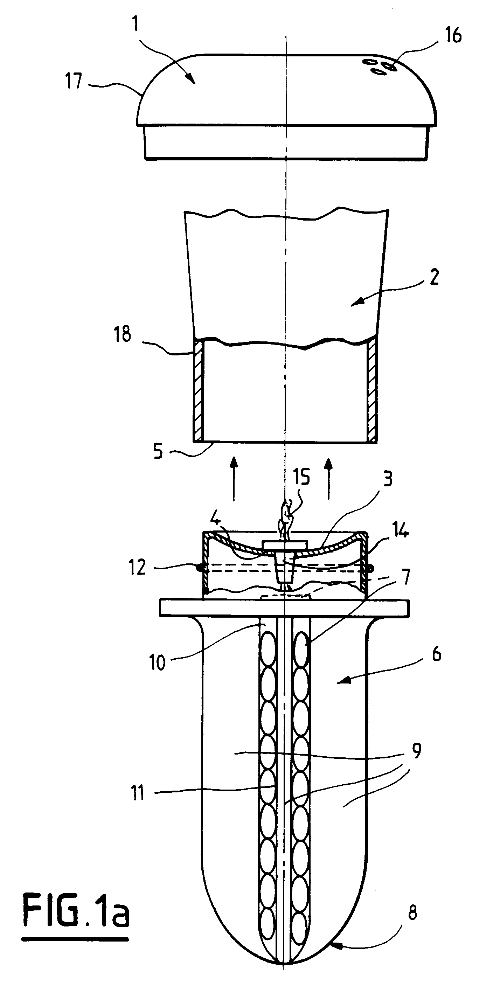

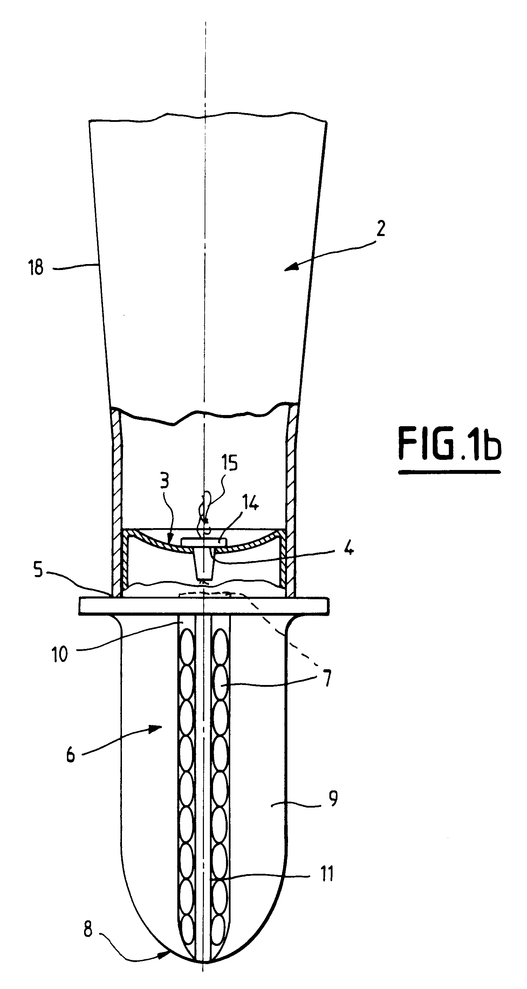

Un dispositif d'arrosage en continu de plantes selon l'invention représenté sur les figures 1a et 1b comporte en combinaison, un réservoir 2, muni en sa partie inférieure d'un fond 3, pourvu au moins d'une ouverture 4, et relié par sa base 5, à un pied de stabilisation 6, contenant un matériau absorbant ou filtrant 7, et se terminant par un guide de pénétration effilé 8. Ledit pied de stabilisation 6 comporte au moins une ailette 9, reliée à un tube creux 10.. Ledit tube creux 10 reçoit à l'intérieur un matériau absorbant 7. Ledit tube creux est pourvu avantageusement entre chaque ailette 9 d'au moins une ouverture 11 permettant ainsi au matériau absorbant 7 d'être en communication avec la terre, par contact immédiat dès enfoncement du pied 6 dans le pot.

Généralement, le pied de stabilisation 6 comporte quatre ailettes 9 disposées radialement à la périphérie du tube 10. Ces ailettes sont donc reliées axialement entre-elles à l'une de leurs arêtes par ledit tube creux 10. ce tube creux 10 renferme un matériau absorbant 7. Ce tube creux 10 est pourvu entre ces quatre ailettes 9 d'une rangée de trous 11 ou bien d'une fente longitudinale permettant ainsi au matériau absorbant 7 d'être en communication directe avec la terre, dès enfoncements du pied 6 dans le pot. Mais, il importe surtout que ces rangées de trous 11 permettent le contact direct entre une partie au moins du matériau absorbant 7, et la terre dans laquelle sera enfoncé le pied de stabilisation 6. Le réservoir et le pied de stabilisation sont reliés de façon classique, par exemple, par emboîtement de l'un dans l'autre ; l'étanchéité étant réalisée au moyen d'un joint torique 12, par vissage ou par agrafage.

Comme il apparaît sur les figures 1a et 1b, la face supérieure du fond 3 du réservoir 2 est concave. L'ouverture 4 du fond 3 est avantageusement traversée par deux demi coquilles filetées 14 rigides ou souples. Ces deux demi coquilles filetées 14 enserrent au moins une mèche 15.

La mèche 15 dépasse légèrement de l'extrémité inférieure des deux demi coquilles filetées, et est située à distance du matériau absorbant 7 contenue axialement dans le pied de stabilisation 6. La mèche 15 est en matériau synthétique et, de préférence, à base de polyester. Habituellement, la taille de la mèche 15 est comprise entre 1 et 5 cm.

Le matériau absorbant 7 est de préférence une éponge ou mousse absorbant l'eau, constituée avantageusement d'un matériau synthétique perméable (par exemple mousse de polyuréthane ou polystyrène expansé à cellules ouvertes). Le réservoir 2, les ailettes 9, le tube creux 10 sont réalisés de préférence en matière plastique. Le réservoir 2 est avantageusement muni d'un couvercle 1, percé d'un ou plusieurs trous 16 et peut comporter une double paroi 18. Généralement, le réservoir 2 a une contenance de 0,5 à 10 litres.

En vue d'un arrosage en continu de plantes au moyen du dispositif de l'invention, on enfonce le pied de stabilisation 6 dans la terre, à proximité de la ou des plantes à arroser.

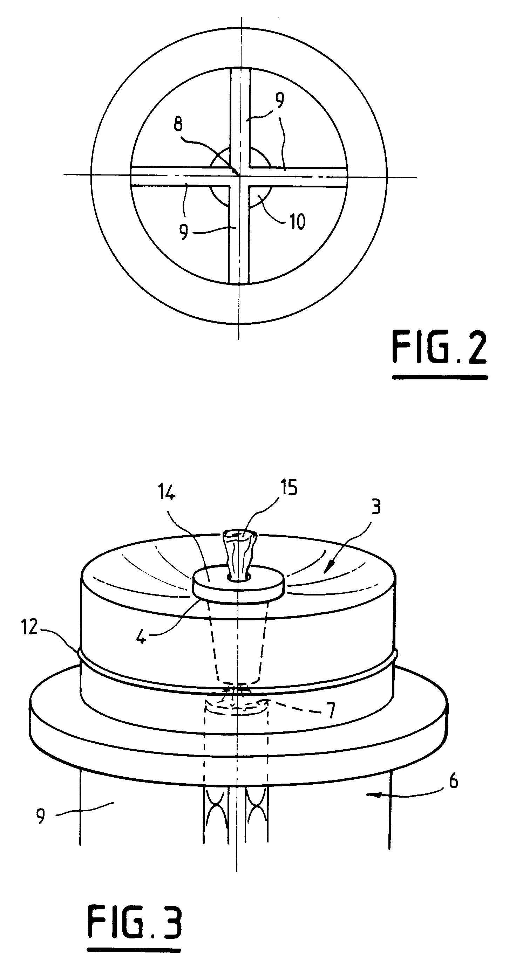

Grâce au guide de pénétration effilé 8, le piquage dans la terre se fait sans difficulté. Le réservoir 2 est rempli d'eau ou d'une solution aqueuse telle par exemple une solution aqueuse de sels minéraux. L'eau ou la solution aqueuse s'écoule goutte-à-goutte (voir figure 3) à travers l'ouverture 4 du fond 3 du réservoir 2 en passant par la mèche 15 enserrée par les demi-coquilles filetées 14. Les gouttes de liquide tombent sur le matériau absorbant 7 contenu dans le tube creux 10 fixé axialement dans le pied de stabilisation 6. La mèche 15 ainsi que les demi-coquilles 14 qui l'enserrent (figure 3) sont positionnées au-dessus dudit matériau absorbant 7, de façon à recevoir au mieux les gouttes de liquide s'écoulant du réservoir.

Ce liquide se propage le long du matériau absorbant 7 et vient alors humidifier la terre qui est à son contact.

Il est particulièrement avantageux que l'ouverture du fond du réservoir 4 soit traversée par des demi-coquilles filetées 14 enserrant la mèche 15. En effet, la mèche 15 dont l'extrémité supérieure est immergée dans le liquide du réservoir 2, facilite grandement l'amenée contrôlée et goutte-à-goutte du liquide sur le matériau absorbant 7.

Le fond 3 du réservoir 2 est indépendant de ce dernier et solidaire de la partie supérieure du pied de stabilisation 6. En variante, ledit fond 3 peut également être prévu solidaire de la partie inférieure du réservoir 2 et légèrement espacé de son bord inférieur 5 pour définir la base d'emboîtement élastique (montage par agrafage ou à baillonnette) ou filetée.

Selon encore une autre variante de réalisation, le fond 3 est réalisé sous forme d'une pièce indépendante amovible venant se loger dans un logement correspondant ménagé à la partie supérieure du pied 6 et coiffé par le réservoir 2. Dans ce dernier cas, le fond 3 avec la mèche 15 sont maintenus en position de fonctionnement par appui du réservoir 2 sur le pied 6, ledit appui étant renforcé par la pression du liquide dans ledit réservoir 2.

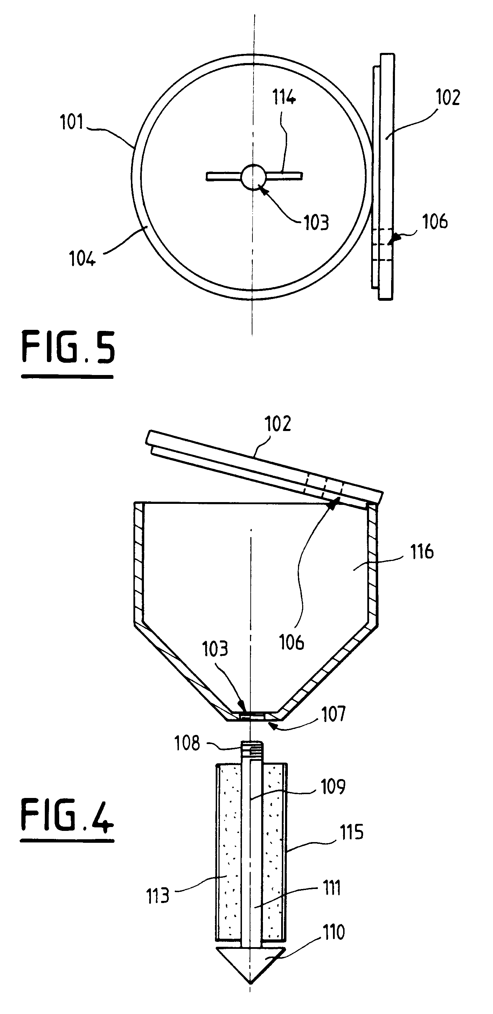

Les figures 4 et 5 dans lesquelles la mèche 15 n'a pas été dessinée, représentent un autre mode de réalisation de l'invention dans lequel sous la base de ce réservoir vient se visser une ailette solidaire d'un guide pointu ou effilé pour enfoncer avec plus d'aisance le dispositif dans la terre. Sur cette ailette, au préalable, vient s'emboîter un filtre qui est démontable. L'ensemble vient se visser sous le réservoir d'eau où sous ce dernier sont crées de fines fentes temporisant la descente de l'eau vers le filtre. Ce filtre entièrement fait de matière plastique comporte deux grilles compressant un tissu de feutrine qui au moment de l'assemblage vient se nicher dans deux détrompeurs ou butées se trouvant sous le réservoir d'eau.

On notera que l'arrosage se fera en permanence à petites doses continues.

La figure 5 représente les parois 101,104 en matière plastique de la réserve d'eau, ayant ainsi que le corps du réservoir des doubles parois, pouvant restées vides à l'intérieur ou habillées de laine de verre 105.

Le dispositif représenté sur les figures 4 et 5 comporte en combinaison un réservoir d'eau 116 relié à sa partie inférieure à un pied constitué d'un ensemble constitué d'une ailette 109 et d'un guide 110 supportant un filtre 113 destiné à être mis en contact immédiat avec la terre dès enfoncement dans le pot. Le réservoir 116 est pourvu d'un couvercle 102 percé de trous 106 pour faciliter la descente de l'eau vers le filtre 113.

Le dispositif d'arrosage de la figure 4 comporte, en outre, un écrou femelle incrusté 103 qui recevra lors de l'assemblage définitif le filetage 108. Au préalable, l'ailette 109 recevra un tube creux ou conduit 111 qui permettra avec la base 107 de maintenir efficacement le filtre 113. Ce dernier viendra lors de l'assemblage en butée contre le guide 110 par sa base et en vis-à-vis de l'ouverture 106 et de l'épaulement 114 par sa partie supérieure. Le filtre 113 est réalisé lui aussi en matière plastique et est constitué de deux grilles 115 enserrant un tissu de feutrine ayant sur ses flancs supérieurs des fentes permettant à l'eau venant de la réserve 116 d'être en contact immédiat avec le tissu de feutrine chargé d'alimenter la plante en eau.
le filtre 113 comporte deux côtés plats qui facilitent pour la plante l'absorption de l'eau, ces côtés plats étant reliés à une partie centrale destinée à être enfilée sur l'ailette 109 et protégée latéralement par les deux grilles 115.

Le réservoir ainsi que son couvercle 102 comportent des doubles parois 101,104 permettant alors une durée d'arrosage plus étendue du fait de l'isolation limitant l'évaporation de l'eau.

Le réservoir est pourvu à sa base de butées de mise en position en vis à vis de l'ouverture 106 du réservoir 116 et de l'épaulement 114 du filtre 113.

Le guide 110 présente latéralement des faces triangulaires dont la base située vers le haut horizontalement correspond sensiblement à la largeur du filtre 113 et du grillage 115 qui le contient, tandis que l'épaisseur entre ses faces latérales, correspondant sensiblement à l'épaisseur du filtre 113 et du grillage 115 le contenant.

Cette épaisseur s'amincit vers la pointe du guide pour faciliter sa pénétration en terre et pour délimiter l'emplacement du filtre.

## Revendications

1. Dispositif d'arrosage en continu de plantes, comportant un réservoir (2,116), muni en sa partie inférieure d'un fond (3) pourvu au moins d'une ouverture (4); le réservoir (2,116) étant relié par sa base (5,107) à un pied de stabilisation (6,109,110) qui contient un matériau absorbant ou filtrant (7,113) en communication avec la terre et se termine par un guide de pénétration effilé (8,110), caractérisé en ce que le pied de stabilisation (6,109,110) comporte au moins une ailette (9,109) reliée à un tube creux central (10,111) contenant le matériau absorbant ou filtrant et qui est positionné de telle façon qu'au moins une mèche (15) reliée au réservoir (2,116) et suspendue au-dessus dudit matériau fait office de goutte-à-goutte de façon à alimenter la plante de manière contrôlée; ledit tube creux (10,111) étant pourvu sur toute sa hauteur et entre chaque ailette (9,109) d'au moins une ouverture (11) longitudinale permettant ainsi au matériau absorbant (7,113) d'être en contact immédiat avec la terre, dès enfoncement du pied (6) dans le pot.

2. Dispositif selon la revendication 1, caractérisé en ce que le pied de stabilisation (6) comporte quatre ailettes (9) reliées axialement au tube creux central (10).

3. Dispositif selon l'une des revendications 1 ou 2, caractérisé en ce que ledit tube creux (10, 111) est pourvu entre chaque ailette (9) d'une rangée de trous.

4. Dispositif selon l'une des revendications 1 ou 2, caractérisé en ce que ledit tube creux (10,111) est pourvu entre chaque ailette (9) d'une fente longitudinale (11).

5. Dispositif selon l'une des revendications 1 à 4, caractérisé en ce que l'ouverture (4) du fond du réservoir (2) reçoit la mèche (15) enserrée entre deux demi-coquilles filetées (14), enfoncées dans le fond (3) du réservoir (2).

6. Dispositif selon l'une des revendications 1 à 5, caractérisé en ce que l'extrémité inférieure de la mèche (15) est située à distance du matériau absorbant.

7. Dispositif selon l'une des revendications précédentes, caractérisé en ce que la mèche (15) est réalisée en un matériau synthétique, de préférence à base de polyester.

8. Dispositif selon l'une des revendications précédentes, caractérisé en ce que le matériau absorbant (7) est une éponge ou une mousse, de préférence en un matériau absorbant synthétique du type polyuréthane ou polystyrène.

9. Dispositif selon l'une des revendications précédentes, caractérisé en ce que la partie supérieure du pied (6) est destinée à s'emboîter élastiquement ou par filetage dans la partie inférieure du réservoir (2) en étant pourvue d'un joint d'étanchéité (12).

10. Dispositif selon l'une des revendications précédentes, caractérisé en ce que la face supérieure du fond (3) est concave et est solidaire de la partie supérieure du pied de stabilisation (6) munie de la mèche (15).

11. Dispositif selon l'une des revendications précédentes, caractérisé en ce que le pied de stabilisation comporte un ensemble ailette/guide (109,110) portant un filtre (113) pourvu d'un épaulement (114) et de deux côtés plats reliés à une partie centrale destinée à être enfilée sur le tube creux central (111) et protégée latéralement par au moins un grillage (115).

12. Dispositif selon l'une des revendications précédentes, caractérisé en ce que le réservoir (2,116) comporte des doubles parois (101,104) ainsi que son couvercle (112) permettant alors une durée d'arrosage plus étendue, due à une évaporation limitée de l'eau.

13. Dispositif selon la revendication 12, caractérisé en ce que le réservoir est pourvu à sa base de butées de mise en position en vis à vis de l'épaulement (114) du filtre (113).

14. Dispositif selon l'une des revendications 11 à 13, caractérisé en ce que le guide (110) présente latéralement des faces triangulaires dont la base située vers le haut horizontalement correspond sensiblement à la largeur du filtre (113) et du grillage (115) qui le contient, et l'épaisseur entre ses faces latérales, correspondant sensiblement à l'épaisseur du filtre (113) et du grillage (115) le contenant en s'amincissant vers sa pointe pour faciliter la pénétration en terre et définir l'emplacement du filtre.

## Claims

1. A device for the continuous watering of plants comprises in combination a tank (2,116) having a lower edge portion (3) having at least one opening (4) the tank (2, 116) connected by the base (5,107) to a stabilisation leg (6, 109, 110) containing an absorbing or filtering material (7, 113) in communication with the soil and ending into a tapered penetration guide (8, 110). This stabilisation leg (6, 109, 110) comprises at least one blade (9, 109) connected to a central hollow tube (10,111) containing the absorbing or filtering material which is positioned in such a way that at least one wick (15) connected to the tank (2, 116) and suspended above the absorbing or filtering material acts as a drip in order to feed the plant in a controlled manner. This tube receives on the inside the absorbing material. The hollow tube (10, 111) is provided laterally of each blade (9, 109) with at least one longitudinal opening (11) enabling the absorbing material (7, 113) to be in communication with the soil with immediate contact, when the leg (6) is driven into the pot.

2. Device according to claim 1: the stabilisation leg (6) comprises four blades (9) interconnected axially to the hollow central tube (10).

3. Device according to claim 1 or 2: the hollow tube (10, 111) is provided between each blades (9) with a row of holes.

4. Device according to claim 1 or 2: the hollow tube (10, 111) is provided between each blade (9) with a longitudinal slot (11).

5. Device according to one of the claims 1 to 4: the opening (4) of the bottom of the tank (2) receives the wick (15) including two opposed half shells clamped (14) driven into the bottom (3) of the tank (9).

6. Device according to one of the claims 1 to 5: the lower extremity of the wick (15) is situated at distance of the absorbing material.

7. Device according to one of the preceding claims: the wick (15) is realised in a synthetic material, preferably polyester based.

8. Device according to one of the preceding claims: the absorbing material (7) is of a sponge like material or foam preferably a synthetic absorbing material like polyurethane or polystyrene.

9. Device according to one of the preceding claims: the upper part of the leg (6) is destinated to fit with elasticity or by threading in the lower part of the tank (2) provided with a watertightness seam (12).

10. Device according to one of the preceding claims: the upper face of the bottom (3) is concave and is liable ot the upper face of the stabilisation leg (6) provided with the wick (15).

11. Device according to one of the preceding claims: the stabilisation leg comprises a combination blade / guide (109, 110) bearing a filter (113) provided with a shoulder (114) and 2 flat sides being joined to a central part designed to be threated over the hollow central tube (111) and protected laterally by at least one screen (115).

12. Device according to one of the preceding claims: the tank (2, 116) as well as its lid (112) comprise double walls (101, 104) hereby enabling a longer watering time due to the insulation which limits the evaportation of the water.

13. Device according to claim 12: the tank is provided at its base with abutment means for positioning the opening of the reservoir in aligned facing relationship (114) to the filter (113).

14. Device according to one of the claim 11 to 13: the guide (110) is provided laterally with triangular faces of which the base situated horizontally upwardly corresponds substantially to the width of the filter (113) and of the screen (115) containing it, while the thickness between its lateral faces corresponds substantially to the thickness of the filter (113) and of the screen (115) containing it. Thickness reduces towards the point of the guide in order to help its penetration into the soil and to define the position of the filter.

## Patentansprüche

1. Vorrichtung zur Dauerbewässerung von Pflanzen,ein Wasserreservoir (2,116) beinhaltend,im unteren Teil mit einem Boden (3) ausgestattet mit mindestens einer Öffnung (4) versehen;das Reservoir durch seine Basis(5,107) mit einem Fuss (6,109?110) verbunden,der ein absorbierendes oder filterndes Material enthält,in Kommunikation mit der Erde und mit einer spitz zulaufenden Führungsschiene abschliessend (8,110) , gekennzeichnet dadurch,dass der Fuss (6,109,110) mindestens eine Rippe (9,109) enthält,mit einem zentralen Hohlrohr(10,111) verbunden,absorbierendes oder filterndes Material beinhaltend,und welches so positionniert ist, dass mindestens eine Lunte(15) mit dem Reservoir (2,116)verbunden ist und über dem Material hängend als Tropfspender dient,um die Pflanzen auf kontrollierte Art zu versorgen; obengenanntes Hohlrohr (10,111) in seiner ganzen Höhe und zwischen jedem Flügel (Rippe) (9,109) mit mindestens einer Längssöffnung versehen, um so dem absorbierendem Material (7,113) einen unmittelbaren Kontakt mit der Erde zu ermöglichen,sobald der Fuss (6) in den Topf gesteckt wird.

2. Die Vorrichtung nach Anspruch 1 ,dadurch gekennzeichnet, dass der Fuss(6) vier Rippen (9) umfasst, achsenförmig mit dem zentralen Hohlrohr (10)verbunden.

3. Vorrichtung nach einem der Ansprüche 1 oder 2 gekennzeichnet durch obengenanntes Hohlrohr (10,111) zwischen jeder Rippe (9) mit einer Löcherreihe versehen.

4. Vorrichtung nach einem der Ansprüche 1 oder 2, gekennzeichnet dadurch , dass obengenanntes Hohlrohr (10,111) zwischen jeder Rippe (9) mit einem längsförmigen Spalt (11) versehen ist.

5. Vorrichtung nach einem der Ansprüche 1 bis 4, dadurch gekennzeichnet,dass die Öffnung (4) des Behälterbodens (2) die Lunte (15) erhält, von zwei halben Gewindeschalen (14) umschlossen, im Boden (3) des Reservoirs 5(2) steckend.

6. Vorrichtung nach einem der Ansprüche 1 bis 5, dadurch gekennzeichnet,dass die Lunte (15) distanziert vom absorbierenden Material ist.

7. Vorrichtung nach einem der vorherigen Ansprüche, dadurch gekennzeichnet,dass die Lunte (15) in einem synthetischen Material ausgeführt ist,vorzugsweise aus Polyester.

8. Vorrichtung nach einem der vorherigen Ansprüche , dadurch gekennzeichnet,dass das absorbierende Material (7) ein Schwamm oder Moos ist, vorzugsweise aus einem synthetischen, absorbierenden Material,wie z.B.Polyrethan oder Polystyrol.

9. Vorrichtung nach einem der vorherigen Ansprüche, dadurch gekennzeichnet,dass der obere Teil des Fusses (6) dazu bestimmt ist,sich elastisch oder durch ein Gewinde in den unteren Teil des Reservoirs (2) einfügt, indem es mit einer Dichtung (12) versehen ist.

10. Vorrichtung nach einem der vorherigen Ansprüche, dadurch gekennzeichnet,dass die obere Seite des Bodens (3) hohl ist,und am oberen Teil des Fusses (6) ,mit der Lunte ausgestattet,haftet .

11. Vorrichtung nach einem der vorherigen Ansprüche, dadurch gekennzeichnet,dass der Fuss eine Rippenführungsschiene (109,110) hat,einen Filter tragend,mit einer Stütze (114) und zwei platten Seiten mit einem zentralen Teil verbunden, dazu dienend in das zentrale Hohlrohr (111) eingeführt zu werden und seitlich von mindestens einem Gitter (115) geschützt wird.

12. Vorrichtung nach einem der vorherigen Ansprüche, dadurch gekennzeichnet,dass das Reservoir (2,116) doppelte Wände (101,104) hat,wie auch sein Deckel (112),wodurch eine limitiertere Verdunstung,und somit eine längere Bewässerung ermöglicht wird.

13. Vorrichtung nach Anspruch 12, dadurch gekennzeichnet, dass das Reservoir am Boden mit Anschlägen gegenüber der Stütze (114) des Filters versehen ist.

14. Vorrichtung nach einem der Ansprüche 11 bis 13, dadurch gekennzeichnet,dass die Führungsschiene (110) seitlich dreieckige Flächen vorweist,bei denen die Basis in der horizontalen Höhe situiert ist,merklich der Filtergrösse (113) und des Gitters entspricht,und die Stärke zwischen diesen Seitenteilen,merklich der Stärke des Filters (113) und des Gitters (115) entspricht,der Behälter sich zuspitzend, um eine Eindringung in die Erde zu erleichtern, und um den Standplatz des Filters zu definieren.
